(19) Europäisches Patentamt
European Patent Office
Office européen des brevets

(11) **EP 2 866 480 A1**

(12) **EUROPEAN PATENT APPLICATION**
published in accordance with Art. 153(4) EPC

(43) Date of publication:
**29.04.2015 Bulletin 2015/18**

(51) Int Cl.:
***H04W 4/20*** (2009.01)

(21) Application number: **13820514.1**

(22) Date of filing: **19.04.2013**

(86) International application number:
**PCT/CN2013/074419**

(87) International publication number:
**WO 2014/012386 (23.01.2014 Gazette 2014/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.07.2012 CN 201210249108**

(71) Applicant: **Huawei Technologies Co., Ltd.**
**Longgang District**
**Shenzhen, Guangdong 518129 (CN)**

(72) Inventors:
• **WU, Yuchun**
**Shenzhen**
**Guangdong 518129 (CN)**
• **LI, Yajuan**
**Shenzhen**
**Guangdong 518129 (CN)**

(74) Representative: **Haley, Stephen**
**Gill Jennings & Every LLP**
**The Broadgate Tower**
**20 Primrose Street**
**London EC2A 2ES (GB)**

(54) **DATA TRANSMISSION METHOD, SYSTEM AND DEVICE, METHOD FOR TERMINAL TO ACQUIRE DATA AND TERMINAL**

(57) Embodiments of the present invention disclose a data transmission method, including: acquiring data of a small data packet service; performing encoding processing on the data in a predefined encoding processing manner, where the predefined encoding processing manner is different from an encoding processing manner of a physical downlink control channel or an enhanced physical downlink control channel; mapping the data after the encoding processing to a small data packet physical channel; transmitting the data to a user terminal over the small data packet physical channel; where the small data packet physical channel includes: any channel of the physical downlink control channel, the enhanced physical downlink control channel, and a preset small data packet physical downlink control channel. Accordingly, the embodiments of the present invention further provide a data transmission system and a device, a method for acquiring data by a terminal, and a terminal. By applying the embodiments of the present invention, air interface resources of an LTE system may be saved.

Acquire data of a small data packet service — 101

Perform encoding processing on the data in a predefined encoding processing manner, where the predefined encoding processing manner is different from an encoding processing manner of a PDCCH or an ePDCCH — 102

Map the data after the encoding processing to a small data packet physical channel — 103

Transmit the data to a UE over the small data packet physical channel — 104

FIG. 1

EP 2 866 480 A1

## Description

This application claims priority to Chinese Patent Application No. 201210249108.5, filed with the Chinese Patent Office on July 18, 2012 and entitled "DATA TRANSMISSION METHOD AND SYSTEM, AND DEVICE, METHOD FOR ACQUIRING DATA BY TERMINAL, AND TERMINAL", which is incorporated herein by reference in its entirety.

## TECHNICAL FIELD

The present invention relates to the communications field, and in particular, to a data transmission method and system, and a device, a method for acquiring data by a terminal, and a terminal.

## BACKGROUND

In a Long Term Evolution (Long Term Evolved, LTE) system of 3GPP, two channels are required to transmit one piece of downlink data. A physical downlink shared channel (Physical Downlink Shared Channel, PDSCH) is used to transmit the downlink data. A physical downlink control channel (Physical Downlink Control Channel, PDCCH) or an enhanced physical downlink control channel (Enhanced Physical Downlink Control Channel, ePDCCH) is used to indicate a PDSCH parameter. After receiving the PDSCH parameter indicated by the PDCCH or ePDCCH, a user terminal acquires, according to the PDSCH parameter, a downlink data packet carried on the PDSCH.

With the popularity and development of intelligent terminals, there are many types of services in the communications field, among which a type of a small data packet service is widely applied in the communications field. A feature of the service is that each data packet is relatively small and occurs in a relatively random manner, for example, an eDDA (Enhanced Diversity Data Application) service. A typical eDDA service is microblog.

In an existing LTE system, two channels are also used to transmit the small data packet service. For example, the PDSCH is used to transmit data of the small data packet service, and the PDCCH or ePDCCH is used to indicate the PDSCH parameter. After acquiring the PDSCH parameter carried on the PDCCH or ePDCCH, the user terminal acquires, according to the PDSCH parameter, the data of the small data packet service carried on the PDSCH. Because the small data packet service has a small amount of data, using two channels to transmit the small data packet service wastes air interface resources of the LTE system during a transmission process.

## SUMMARY

Embodiments of the present invention provide a data transmission method and system, and a device, a method for acquiring data by a terminal, and a terminal, which can save air interface resources of an LTE system during a data communication process of a small data packet service.

A first aspect of an embodiment of the present invention provides a data transmission method, where the method may include:

acquiring data of a small data packet service;
performing encoding processing on the data in a predefined encoding processing manner, where the predefined encoding processing manner is different from an encoding processing manner of a PDCCH or an ePDCCH;
mapping the data after the encoding processing to a small data packet physical channel; and
transmitting the data to a user terminal over the small data packet physical channel; where
the small data packet physical channel includes: any channel of the PDCCH, the ePDCCH, and a preset small data packet PDCCH.

In a first possible implementation manner, the performing encoding processing on the data in a predefined encoding processing manner may include:

adding a predefined cyclic redundancy check code (Cyclic Redundancy Check, CRC) to the data, where the predefined CRC is different from a CRC added during an encoding processing process of the PDCCH or the ePDCCH;
using a user identifier to perform scrambling on the data to which the predefined CRC is added;
performing channel encoding on the scrambled data; and
performing rate matching on the data after the channel encoding.

In a second possible implementation manner, the performing encoding processing on the data in a predefined encoding processing manner may include:

adding a CRC to the data;
using a user identifier to perform predefined scrambling on the data to which the CRC is added, where the predefined scrambling is different from scrambling performed during an encoding processing process of the PDCCH or the ePDCCH;
performing channel encoding on the scrambled data; and
performing rate matching on the data after the channel encoding.

In a third possible implementation manner, the performing encoding processing on the data in a predefined encoding processing manner may include:

adding a predefined CRC to the data, where the predefined CRC is different from a CRC added during an encoding processing process of the PDCCH or the ePDCCH;
using a user identifier to perform predefined scrambling on the data to which the predefined CRC is added, where the predefined scrambling is different from scrambling performed during the encoding processing process of the PDCCH or the ePDCCH;
performing channel encoding on the scrambled data; and
performing rate matching on the data after the channel encoding.

With reference to the first possible implementation manner of the first aspect or the third possible implementation manner of the first aspect, in a fourth possible implementation manner, the predefined CRC includes:

a CRC that is of the data of the small data packet service and calculated by using the following formula:

$$g_{CRC16}(D) = [D^{16} + D^5 + D^3 + D^2 + 1] \text{ for a CRC length } L = 16$$.

With reference to the second possible implementation manner of the first aspect or the third possible implementation manner of the first aspect, in a fifth possible implementation manner, the predefined scrambling may include: reverse scrambling.

With reference to any possible implementation manner of the first possible implementation manner to the fifth possible implementation manner of the first aspect, in a sixth possible implementation manner, the mapping the data after the encoding processing to a small data packet physical channel may include:

mapping the data after rate matching to a predefined control channel element, where a size of the predefined control channel element is different from that of a control channel element of the PDCCH or the ePDCCH, and the predefined control channel element belongs to the small data packet PDCCH.

A second aspect of the present invention provides a method for acquiring data by a terminal, where the method may include:

performing, according to a pre-acquired decoding processing manner, decoding processing on data carried on a small data packet physical channel, where the pre-acquired decoding processing manner corresponds to an encoding processing manner, which is different from encoding processing for a PDCCH or an ePDCCH, of the data carried on the small data packet physical channel on a network side;
acquiring the data after the decoding processing, where the data after the decoding processing is data of a small data packet service; and
uploading the acquired data of the small data packet service to an upper layer; where
the small data packet physical channel includes: any channel of the PDCCH, the ePDCCH and a small data packet PDCCH preset on the network side.

In a first possible implementation manner, the performing, according to a pre-acquired decoding processing manner, decoding processing on data carried on a small data packet physical channel may include:

performing blind detection on the small data packet PDCCH;
performing decoding on the data found by means of the blind detection;
performing descrambling on the decoded data by using a pre-acquired descrambling manner, where the pre-acquired descrambling manner corresponds to a scrambling manner, which is different from scrambling for the PDCCH or the ePDCCH, of the data carried on the small data packet physical channel on the network side; and

performing a CRC check on the descrambled data.

In a second possible implementation manner, the performing, according to a pre-acquired decoding processing manner, decoding processing on data carried on a small data packet physical channel may include:

performing blind detection on the small data packet PDCCH;

performing decoding on the data found by means of the blind detection;

using a user identifier to perform descrambling on the decoded data; and

using a pre-acquired CRC to perform a CRC check on the descrambled data, where the pre-acquired CRC is different from a CRC added during an encoding processing process of the PDCCH or the ePDCCH.

In a third possible implementation manner, the performing, according to a pre-acquired decoding processing manner, decoding processing on data carried on a small data packet physical channel may include:

performing blind detection on the small data packet PDCCH;

performing decoding on the data found by means of the blind detection;

performing descrambling on the decoded data by using a pre-acquired descrambling manner, where the pre-acquired descrambling manner corresponds to a scrambling manner, which is different from scrambling for the PDCCH or the ePDCCH, of the data carried on the small data packet physical channel on the network side; and

using a pre-acquired CRC to perform a CRC check on the descrambled data, where the pre-acquired CRC is different from a CRC added during an encoding processing process of the PDCCH or the ePDCCH.

With reference to the first possible implementation manner of the second aspect or the third possible implementation manner of the second aspect, in a fourth possible implementation manner, the performing descrambling on the decoded data by using a pre-acquired descrambling manner may include:

using a reverse user identifier to perform descrambling on the decoded data.

With reference to the second possible implementation manner of the second aspect or the third possible implementation manner of the second aspect, in a fifth possible implementation manner, the pre-acquired CRC includes:

a CRC that is of the data of the small data packet service and calculated by using the following formula:

$$g_{CRC16}(D) = [D^{16} + D^5 + D^3 + D^2 + 1] \text{ for a CRC length } L = 16$$.

With reference to the second aspect or any possible implementation manner of the first possible implementation manner to the fifth possible implementation manner of the second aspect, in a sixth possible implementation manner, a size of a control channel element of the small data packet PDCCH is different from that of a control channel element of the PDCCH or the ePDCCH.

A third aspect of the present invention provides a network device, where the network device may include: a first acquiring unit, an encoding unit, a mapping unit, and a transmitting unit, where:

the first acquiring unit is configured to acquire data of a small data packet service;

the encoding unit is configured to perform encoding processing on the data, which is acquired by the first acquiring unit, in a predefined encoding processing manner, where the predefined encoding processing manner is different from an encoding processing manner of a PDCCH or an ePDCCH;

the mapping unit is configured to map the data that has the encoding processing performed by the encoding unit to a small data packet physical channel; and

the transmitting unit is configured to transmit, to a user terminal over the small data packet physical channel, the data that is mapped by the mapping unit to the small data packet physical channel; where

the small data packet physical channel includes: any channel of the PDCCH, the ePDCCH, and a preset small data packet PDCCH.

In a first possible implementation manner, the encoding unit may include:

a check code adding unit, configured to add a predefined CRC to the data, where the predefined CRC is different from a CRC added during an encoding processing process of the PDCCH or the ePDCCH;

a scrambling unit, configured to use a user identifier to perform scrambling on the data to which the CRC is added by the check code adding unit;

a channel encoding unit, configured to perform channel encoding on the data that is scrambled by the scrambling unit; and

a matching unit, configured to perform rate matching on the data that has the channel encoding performed by the channel encoding unit.

With reference to the first possible implementation manner of the third aspect, in a second possible implementation manner, the scrambling unit may be further configured to use a user identifier to perform predefined scrambling on the data to which the CRC is added, where the predefined scrambling is different from scrambling performed during an encoding processing process of the PDCCH or the ePDCCH.

With reference to the first possible implementation manner of the third aspect or the second possible implementation manner of the third aspect, in a third possible implementation manner, the check code adding unit may be further configured to add, to the data, a CRC that is of the data of the small data packet service and calculated by using the following formula:

$$g_{CRC16}(D) = [D^{16} + D^5 + D^3 + D^2 + 1] \text{ for a CRC length } L = 16_.$$

With reference to the first possible implementation manner of the third aspect or the second possible implementation manner of the third aspect, in a fourth possible implementation manner, the scrambling unit may be further configured to use a user identifier to perform reverse scrambling on the data to which the CRC is added.

With reference to the third aspect or any one of the first possible implementation manner to the fourth possible implementation manner of the third aspect, in a fifth possible implementation manner, the mapping unit may be further configured to map the data after the rate matching to a predefined control channel element, where a size of the predefined control channel element is different from that of a control channel element of the PDCCH or the ePDCCH, and the predefined control channel element belongs to the small data packet PDCCH.

A fourth aspect of the present invention provides a user terminal, where the user terminal may include: a decoding unit, a second acquiring unit, and an uploading unit, where:

the decoding unit is configured to perform, according to a pre-acquired decoding processing manner, decoding processing on data carried on a small data packet physical channel, where the pre-acquired decoding processing manner corresponds to an encoding processing manner, which is different from encoding processing for a PDCCH or an ePDCCH, of the data carried on the small data packet physical channel on a network side;

the second acquiring unit is configured to acquire the data after the decoding processing performed by the decoding unit, where the data after the decoding processing is data of a small data packet service; and

the uploading unit is configured to upload the data of the small data packet service acquired by the second acquiring unit acquiring unit to an upper layer; where

the small data packet physical channel includes: any channel of the PDCCH, the ePDCCH and a small data packet PDCCH preset on the network side.

In a first possible implementation manner, the decoding unit may include:

a detection unit, configured to perform blind detection on the small data packet PDCCH;

a decoding unit, configured to perform decoding on the data found by the detection unit by means of the blind detection;

a descrambling unit, configured to perform descrambling, by using a pre-acquired descrambling manner, on the data that is decoded by the decoding unit, where the pre-acquired descrambling manner corresponds to a scrambling manner, which is different from scrambling for the PDCCH or the ePDCCH, of the data carried on the small data packet physical channel on the network side; and

a check unit, configured to perform a CRC check on the data that is descrambled by the descrambling unit.

With reference to the first possible implementation manner of the fourth aspect, in a second possible implementation manner, the check unit may be further configured to use a pre-acquired CRC to perform a CRC check on the data that is descrambled by the descrambling unit, where the pre-acquired CRC is different from a CRC added during an encoding processing process of the PDCCH or the ePDCCH.

With reference to the first possible implementation manner of the fourth aspect or the second possible implementation manner of the fourth aspect, in a third possible implementation manner, the descrambling unit may be further configured to use a reverse user identifier to perform descrambling on the data that is decoded by the decoding unit.

With reference to the second possible implementation manner of the fourth aspect or the third possible implementation manner of the fourth aspect, in a fourth possible implementation manner, the check unit may be further configured to perform, by using a CRC that is obtained by calculation by using the following formula, a check on the data that is descrambled by the descrambling unit:

$$g_{CRC16}(D) = [D^{16} + D^5 + D^3 + D^2 + 1] \text{ for a CRC length } L = 16$$

.

A fifth aspect of the present invention provides a data transmission system, where the data transmission system may include: a network device and a user terminal, where:

the network device includes: a first acquiring unit, an encoding unit, a mapping unit, and a transmitting unit, where:

the first acquiring unit is configured to acquire data of a small data packet service;
the encoding unit is configured to perform encoding processing on the data, which is acquired by the first acquiring unit, in a predefined encoding processing manner, where the predefined encoding processing manner is different from an encoding processing manner of a PDCCH or an ePDCCH;
the mapping unit is configured to map the data that has the encoding processing performed by the encoding unit to a small data packet physical channel;
the transmitting unit is configured to transmit, to a user terminal over the small data packet physical channel, the data that is mapped by the mapping unit to the small data packet physical channel; and
the user terminal includes: a decoding unit, a second acquiring unit, and an uploading unit, where:

the decoding unit is configured to perform, according to a pre-acquired decoding processing manner, decoding processing on data carried on a small data packet physical channel, where the pre-acquired decoding processing manner corresponds to an encoding processing manner, which is different from encoding processing for the PDCCH or the ePDCCH, of the data carried on the small data packet physical channel on a network side;
the second acquiring unit is configured to acquire the data after the decoding processing performed by the decoding unit, where the data after the decoding processing is the data of the small data packet service; and the uploading unit is configured to upload the acquired data of the small data packet service to an upper layer; where
the small data packet physical channel includes: any channel of the PDCCH, the ePDCCH and a small data packet PDCCH preset on the network side.

In embodiments of the present invention, encoding processing is performed on acquired data in a predefined encoding processing manner, where the predefined encoding processing manner is different from an encoding processing manner of a PDCCH or an ePDCCH; the data after the encoding processing is mapped to a small data packet physical channel; and then the data is transmitted over the small data packet physical channel to a UE. One small data packet physical channel may be used to transmit data of a small data packet service, and therefore, air interface resources of an LTE system are saved.

BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of a first embodiment of a data transmission method according to an embodiment of the present invention;
FIG. 2 is a schematic flowchart of a second embodiment of a data transmission method according to an embodiment of the present invention;
FIG. 3 is a schematic flowchart of a third embodiment of a data transmission method according to an embodiment of the present invention;

FIG. 4 is a schematic flowchart of a fourth embodiment of a data transmission method according to an embodiment of the present invention; FIG. 5 is a schematic flowchart of a first embodiment of a method for acquiring data by a terminal according to an embodiment of the present invention;

FIG. 5 is a schematic flowchart of a second embodiment of a method for acquiring data by a terminal according to an embodiment of the present invention;

FIG. 7 is a schematic flowchart of a third embodiment of a method for acquiring data by a terminal according to an embodiment of the present invention;

FIG. 8 is a schematic flowchart of a third embodiment of a method for acquiring data by a terminal according to an embodiment of the present invention;

FIG. 9 is a schematic structural diagram of a first embodiment of a network device according to an embodiment of the present invention;

FIG. 10 is a schematic structural diagram of a second embodiment of a network device according to an embodiment of the present invention;

FIG. 11 is a schematic structural diagram of a first embodiment of a user terminal according to an embodiment of the present invention;

FIG. 12 is a schematic structural diagram of a second embodiment of a user terminal according to an embodiment of the present invention;

FIG. 13 is a schematic structural diagram of a data transmission system according to an embodiment of the present invention;

FIG. 14 is a schematic structural diagram of another network device according to an embodiment of the present invention;

FIG. 15 is a schematic structural diagram of another user terminal according to an embodiment of the present invention; and

FIG. 16 is a schematic structural diagram of another data transmission system according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

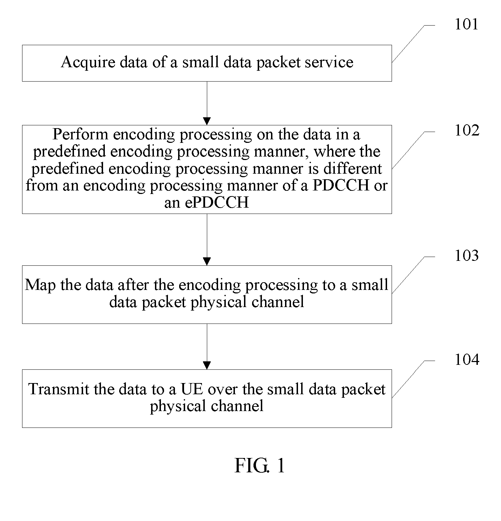

FIG. 1 is a schematic flowchart of a first embodiment of a data transmission method according to an embodiment of the present invention. The method may be applied to a network device on a network side. As shown in FIG. 1, the method includes:

101. Acquire data of a small data packet service.

A feature of the small data packet service is that each data packet is relatively small and occurs in a relatively random manner, for example, an eDDA service. Atypical eDDA service is microblog.

102. Perform encoding processing on the data in a predefined encoding processing manner, where the predefined encoding processing manner is different from an encoding processing manner of a PDCCH or an ePDCCH(.

Optionally, the predefined encoding processing manner in the step 102 may be specifically different from a prior-art encoding processing manner of DCI, where the manner is used in a process in which the PDCCH or ePDCCH indicates downlink control information (Downlink Control Information, DCI) for a UE, and the differences may specifically lie in a CRC adding phase, scrambling phase, rate matching phase, and mapping phase in the encoding processing process.

103. Map the data after the encoding processing to a small data packet physical channel.

Optionally, the small data packet physical channel includes: any channel of the PDCCH, the ePDCCH, and a preset small data packet PDCCH.

The PDCCH and ePDCCH may be a traditional PDCCH and a traditional ePDCCH, whereas the small data packet PDCCH is a preset channel according to this embodiment of the present invention. A size of the control channel element (Control Channel Element, CCE) of the small data packet PDCCH is different from that of a CCE of the PDCCH (for example, the traditional PDCCH) or an enhanced control channel element (Enhanced Control Channel Element, eCCE) of the ePDCCH (for example, the traditional ePDCCH). Specifically, if the size of the CCE of the small data packet PDCCH is 108 bits, that is, one CCE of the small data packet PDCCH may transmit a maximum of 108 bits of data packets. The size of the CCE may be specifically set according to a size of a data packet of a small data packet service.

When acquiring the data carried on the small data packet PDCCH, the UE may learn, according to the size of the CCE, that the data carried on the channel is data of a small data packet service.

An encoding processing process of the small data packet PDCCH may be specifically the same as an encoding processing process of a PDCCH (for example, the traditional eDCCH) or an ePDCCH (for example, the traditional ePDCCH); the encoding processing of the small data packet PDCCH may further be specifically different from the encoding processing process of the traditional PDCCH and ePDCCH, as specifically described in the step 102.

Optionally, when the encoding processing process of the small data packet PDCCH may be specifically the same as that of the PDCCH and ePDCCH, the step 102 may further be specifically: performing encoding processing on the data, where the encoding processing is the same as the encoding processing of the PDCCH (for example, the traditional PDCCH) or ePDCCH (for example, the traditional ePDCCH).

As an optional implementation manner, the step 102 may specifically be: performing encoding processing on the data in a predefined encoding processing manner when the amount of data of the small data packet service is smaller than or equal to the maximum data transmission amount of the CCE of the traditional PDCCH and the eCCE of the traditional ePDCCH. Then, in the step 103, the data after the encoding processing is mapped to the PDCCH (for example, the traditional PDCCH) or ePDCCH (for example, the traditional ePDCCH) for indicating the CCE or eCCE of a physical downlink shared channel (Physical Downlink Shared Channel, PDSCH) parameter.

When the amount of data of the small data packet service is larger than the maximum data transmission amount of the CCE of the PDCCH (for example, the traditional PDCCH) and the eCCE of the ePDCCH (for example, the traditional ePDCCH), encoding processing is performed on the data, where the encoding processing may be the same as the encoding processing of the PDCCH (for example, the traditional PDCCH) or ePDCCH (for example, the traditional ePDCCH). Then, in the step 103, the data after the encoding processing is mapped to the small data packet PDCCH.

104. Transmit the data to a UE over the small data packet physical channel.

As an optional implementation manner, when the small data packet physical channel is a small data packet PDCCH, the encoding processing manner in the step 102 may be the same as the encoding processing manner of the PDCCH (for example, the traditional PDCCH) or ePDCCH (for example, the traditional ePDCCH). Because the size of the CCE of the small data packet PDCCH is different from the size of the CCE of the PDCCH (for example, the traditional PDCCH) or the eCCE of the ePDCCH (for example, the traditional ePDCCH), when the UE acquires data from the small data packet PDCCH, the data is acquired according to the size of the CCE of the small data packet PDCCH. In this way, the data of the small data packet service can be distinguished.

In this embodiment, encoding processing is performed on acquired data in a predefined encoding processing manner; the data after the encoding processing is mapped to a small data packet physical channel; and then the data is transmitted over the small data packet physical channel to a UE. One small data packet physical channel may be used to transmit data of a small data packet service, and therefore, air interface resources of an LTE system are saved.

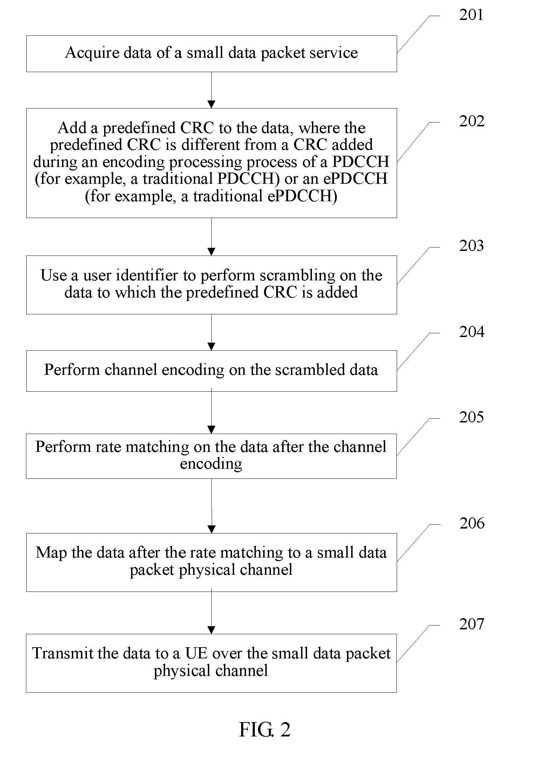

FIG. 2 is a schematic flowchart of a second embodiment of a data transmission method according to an embodiment of the present invention. The method may be applied to a network device on a network side. As shown in FIG. 2, the method includes:

201. Acquire data of a small data packet service.

202. Add a predefined CRC to the data, where the predefined CRC is different from a CRC added during an encoding processing process of a PDCCH (for example, a traditional PDCCH) or an ePDCCH (for example, a traditional ePDCCH).

After acquiring the data delivered from the network side, a UE uses the predefined CRC to perform a check on the acquired data, and determines, when the check is successful, that the acquired data is the data of the small data packet service. When determining that the acquired data is the data of the small data packet service, the UE may upload the acquired data to an upper layer.

As an optional implementation manner, the predefined CRC includes:

a CRC obtained by calculation by using the following formula:

$$g_{CRC16}(D) = [D^{16} + D^5 + D^3 + D^2 + 1] \text{ for a CRC length } L = 16$$

After acquiring the data delivered from the network side, the UE uses the foregoing calculated CRC to perform the check on the acquired data, and determines, when the check is successful, that the acquired data is the data ofthea small data packet service.

203. Use a user identifier to perform scrambling on the data to which the predefined CRC is added.

The user identifier is the user identifier of the UE corresponding to the data of the small data packet service. It is specifically the user identifier of the UE in step 207.

Optionally, the user identifier may specifically include: a radio network temporary identifier (12Radio 12Network Temporary Identifier, RNTI). Modulo-2 scrambling may be used in a scrambling process.

As an optional implementation manner, the foregoing scrambling may specifically be positive-sequence scrambling and the scrambling manner is the same as the scrambling in the encoding processing processes of the traditional PDCCH and ePDCCH.

204. Perform channel encoding on the scrambled data.

205. Perform rate matching on the data after the channel encoding.

206. Map the data after the rate matching to a small data packet physical channel.

As an optional implementation manner, the step 206 may include: mapping the data after the rate matching to a predefined CCE, where a size of the predefined CCE is different from that of a CCE of the PDCCH (for example, the traditional PDCCH) or an eCCE of the ePDCCH (for example, the traditional ePDCCH), and the predefined CCE belongs to the small data packet PDCCH. Optionally, in this implementation manner, the step 206 is to map the data after the encoding processing to the CCE of the small data packet PDCCH.

As an optional implementation manner, the step 206 may include: mapping the data after the rate matching to the CCE of the PDCCH (for example, the traditional PDCCH) or the eCCE of the ePDCCH (for example, the traditional ePDCCH). 207. Transmit, to the UE over the small data packet physical channel, the data that is mapped to the small data packet physical channel.

In this embodiment, a predefined CRC is added to acquired data of a small data packet service, so that a UE can distinguish the small data packet service and a non-small data packet service. In addition, one small data packet physical channel may be used to transmit data of the small data packet service, and therefore, air interface resources of an LTE system are saved.

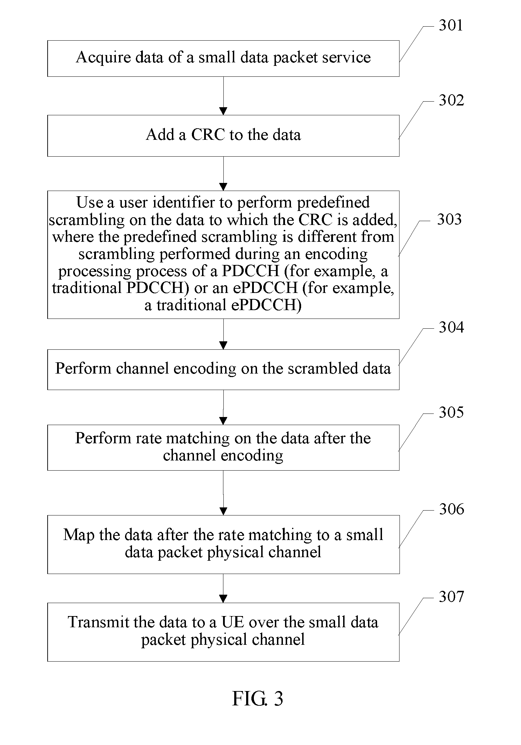

FIG. 3 is a schematic flowchart of a third embodiment of a data transmission method according to an embodiment of the present invention. The method may be applied to a network device on a network side. As shown in FIG. 3, the method includes:

301. Acquire data of a small data packet service.

302. Add a CRC to the data.

Optionally, the foregoing CRC may specifically be the same as the CRC added during an encoding processing process of a PDCCH (for example, a traditional PDCCH) or an ePDCCH (for example, a traditional ePDCCH).

303. Use a user identifier to perform predefined scrambling on the data to which the CRC is added, where the predefined scrambling is different from scrambling performed during an encoding processing process of a traditional PDCCH (for example, a traditional PDCCH) or an ePDCCH (for example, a traditional ePDCCH).

The user identifier is a user identifier of a UE corresponding to the data of the small data packet service.

In this way, after acquiring the data delivered from the network side, the UE may use a descrambling manner corresponding to the predefined scrambling to perform descrambling, and determine, if the descrambling is successful, that the acquired data is the data of the small data packet service.

Optionally, the predefined scrambling is reverse scrambling. The step 303 specifically includes:

using a user identifier to perform reverse scrambling on the data to which the CRC is added.

304. Perform channel encoding on the scrambled data.

305. Perform rate matching on the data after the channel encoding.

306. Map the data after the rate matching to a small data packet physical channel.

As an optional implementation manner, the step 306 may include:

mapping the data after the rate matching to a predefined CCE, where a size of the predefined CCE is different from that of a CCE of the PDCCH (for example, the traditional PDCCH) or an eCCE of the ePDCCH (for example, the traditional ePDCCH), and the predefined control channel element belongs to the small data packet PDCCH.

As an optional implementation manner, the step 306 may include: mapping the data after the rate matching to the CCE of the PDCCH (for example, the traditional PDCCH) or the eCCE of the ePDCCH (for example, the traditional ePDCCH).

307. Transmit, to the UE over the small data packet physical channel, the data that is mapped to the small data packet physical channel.

In this embodiment, a user identifier is used to perform predefined scrambling on data to which a CRC added, so that a UE can distinguish a small data packet service and a non-small data packet service. In addition, one small data packet physical channel may be used to transmit data of the small data packet service, and therefore, air interface resources of an LTE system are saved.

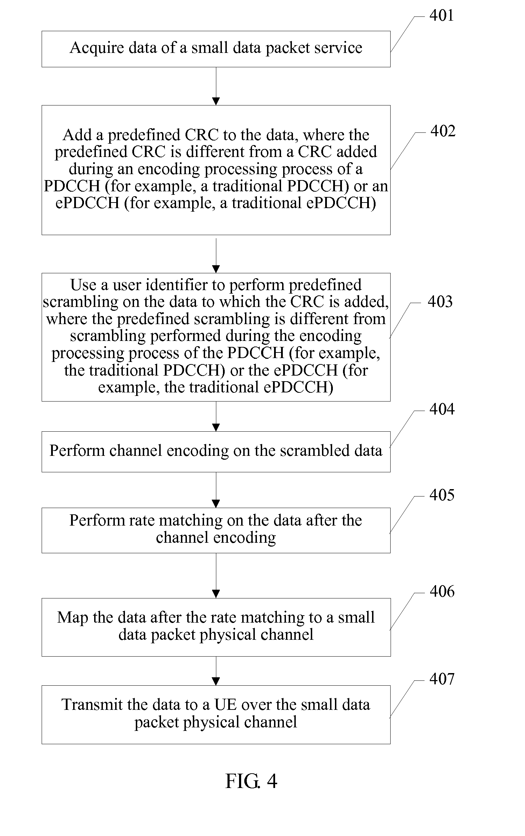

FIG. 4 is a schematic flowchart of a fourth embodiment of a data transmission method according to an embodiment of the present invention. The method may be applied to a network device on a network side. As shown in FIG. 4, the method includes:

401. Acquire data of a small data packet service.

402. Add a predefined CRC to the data, where the predefined CRC is different from a CRC added during an encoding processing process of a traditional PDCCH (for example, a traditional PDCCH) or an ePDCCH (for example, a traditional ePDCCH).

After acquiring the data delivered from the network side, a UE uses the predefined CRC to perform a check on the acquired data, and determines, when the check is successful, that the acquired data is the data of the small data packet service. When determining that the acquired data is the data of the small data packet service, the UE may upload the acquired data to an upper layer.

As an optional implementation manner, the predefined CRC includes:

a CRC obtained by calculation by using the following formula:

$$g_{CRC16}(D) = [D^{16} + D^5 + D^3 + D^2 + 1] \text{ for a CRC length } L = 16$$

After acquiring the data delivered from the network side, the UE uses the foregoing calculated CRC to perform the check on the acquired data, and determines, when the check is successful, that the acquired data is the data of the small data packet service.

403. Use a user identifier to perform predefined scrambling on the data to which the predefined CRC is added, where the predefined scrambling is different from scrambling performed during the encoding processing process of the PDCCH (for example, the traditional PDCCH) or the ePDCCH (for example, the traditional ePDCCH).

The user identifier is a user identifier of a UE corresponding to the data of the small data packet service.

In this way, after acquiring the data delivered from the network side, the UE may use a descrambling manner corresponding to the predefined scrambling to perform descrambling, and determine, if the descrambling is successful, that the acquired data is the data of the small data packet service.

Optionally, the predefined scrambling is reverse scrambling. The step 403 specifically includes:

using a user identifier to perform reverse scrambling on the data to which the CRC added.

404. Perform channel encoding on the scrambled data.

405. Perform rate matching on the data after the channel encoding.

406. Map the data after the rate matching to a small data packet physical channel.

As an optional implementation manner, the step 406 may include:

mapping the data after the rate matching to a predefined CCE, where a size of the predefined CCE is different from that of the CCE of the PDCCH (for example, the traditional PDCCH) or the eCCE of the ePDCCH (for example, the traditional ePDCCH), and the predefined control channel element belongs to the small data packet PDCCH.

As an optional implementation manner, the step 406 may include: mapping the data after the rate matching to the CCE of the PDCCH (for example, the traditional PDCCH) or the eCCE of the ePDCCH (for example, the traditional ePDCCH).

407. Transmit, to the UE over the small data packet physical channel, the data that is mapped to the small data packet physical channel.

In this embodiment, a user identifier is used to perform predefined scrambling on data to which a predefined CRC is added, so that a UE can distinguish a small data packet service from a non-small data packet service. In addition, one small data packet physical channel may be used to transmit data of the small data packet service, and therefore, air interface resources of an LTE system are saved.

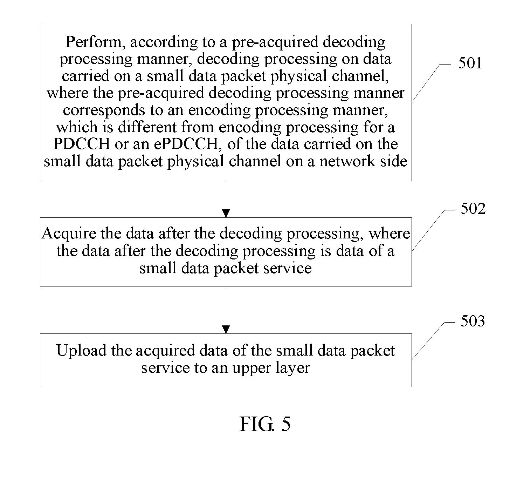

FIG. 5 is a schematic flowchart of a first embodiment of a method for acquiring data by a terminal according to an embodiment of the present invention. The method may be applied to a user equipment on a user side. As shown in FIG. 5, the method includes:

501. Perform, according to a pre-acquired decoding processing manner, decoding processing on data carried on a small data packet physical channel, where the pre-acquired decoding processing manner corresponds to an encoding processing manner, which is different from encoding processing for a PDCCH (for example, a traditional PDCCH) or an ePDCCH (for example, a traditional ePDCCH), of the data carried on the small data packet physical channel on a network side.

In the step 501, the data obtained by means of decoding processing is data of a small data packet service.

Optionally, if encoding processing for the data carried on the small data packet physical channel on the network side is performed in a CRC adding phrase different from a CRC adding phase in the encoding processing process of the PDCCH and ePDCCH, then the pre-acquired decoding processing manner is used in a CRC check phase that is different from a CRC check phase of acquired PDCCH and ePDCCH data. Certainly, the difference may also lie in a descrambling phase.

The small data packet physical channel includes: any channel of the PDCCH, the ePDCCH, and the small data packet PDCCH.

Optionally, the foregoing PDCCH and ePDCCH may specifically be the traditional PDCCH and traditional ePDCCH.

502. Acquire the data after the decoding processing, where the data after the decoding processing is data of a small data packet service.

In the step 502, the data after the decoding processing may be determined as the data of the small data packet service.

503. Upload the acquired data of the small data packet service to an upper layer.

Optionally, the step 503 may specifically be uploading the acquired data of the small data packet service to an upper layer that is used to process the data of the small data packet service.

As an optional implementation manner, when the small data packet physical channel is a small data packet PDCCH, the decoding processing manner in the step 501 may be the same as a decoding manner of decoding data of a non-small data packet service of the PDCCH (for example, the traditional PDCCH) or the ePDCCH (for example, the traditional ePDCCH). Because a size of a CCE of the small data packet PDCCH is different from a size of a CCE of the PDCCH (for example, the traditional PDCCH) or an eCCE of the ePDCCH (for example, the traditional ePDCCH), when the UE acquires data from the small data packet PDCCH, the data is acquired according to the size of the CCE of the small data packet PDCCH. In this way, the data of the small data packet service may be distinguished. In addition, an encoding processing manner of the small data packet PDCCH on the network side may be the same as the encoding processing manner of the PDCCH (for example, the traditional PDCCH) or the ePDCCH (for example, the traditional ePDCCH).

In this embodiment, data of a small data packet service may be acquired from a small data packet physical channel, which, compared with the prior art in which data of a small data packet service is acquired by using two physical channels, may save air interface resources of an LTE system and meanwhile achieve higher efficiency when the data of the small data packet service is acquired.

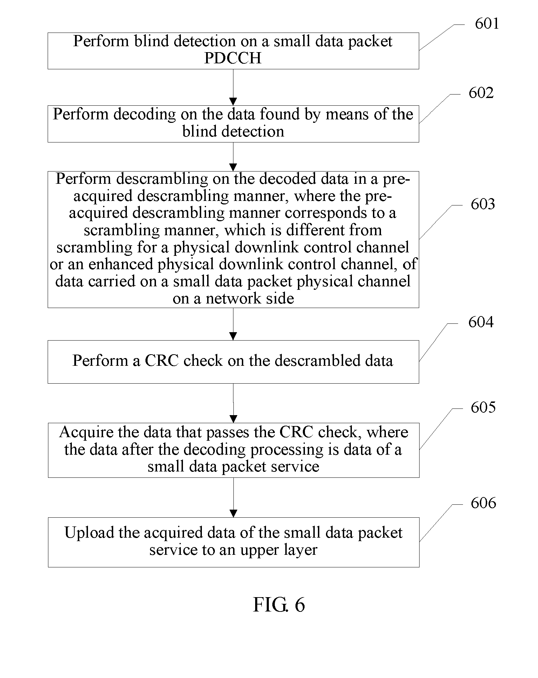

FIG. 6 is a schematic flowchart of a second embodiment of a method for acquiring data by a terminal according to an embodiment of the present invention. The method may be applied to a user equipment on a user side. As shown in FIG. 6, the method includes:

601. Perform blind detection on the small data packet PDCCH.

602. Perform decoding on the data found by means of the blind detection.

603. Perform descrambling on the decoded data by using a pre-acquired descrambling manner, where the pre-acquired descrambling manner corresponds to a scrambling manner, which is different from scrambling for a PDCCH (for example, a traditional PDCCH) or an ePDCCH (for example, a traditional ePDCCH), of the data carried on a small data packet physical channel on a network side.

Optionally, if positive-sequence scrambling is performed on the data carried on the PDCCH (for example, the traditional PDCCH) or the ePDCCH (for example, the traditional ePDCCH) on the network side, scrambling different from the positive-sequence scrambling, such as reverse scrambling, is performed on the data carried on the small data packet physical channel on the network side, and the pre-acquired descrambling manner in the step 603 corresponds to the scrambling, different from the positive-sequence scrambling, performed on the data carried on the small data packet physical channel on the network side; if reverse scrambling is performed on the data carried on the small data packet physical channel on the network side, a reverse user identifier may be used in the step 603 to perform descrambling on the decoded data, where the data acquired after the descrambling is data of a small data packet service.

604. Perform a CRC check on the descrambled data.

As an optional implementation manner, the foregoing CRC may specifically be the same as a CRC added during the encoding processing process of the PDCCH (for example, the traditional PDCCH) or the ePDCCH (for example, the traditional ePDCCH) on the network side.
605. Acquire the data that passes the CRC check, where the data after the decoding processing is data of a small data packet service.

606. Upload the acquired data of the small data packet service to an upper layer.

As an optional implementation manner, when the small data packet physical channel is a small data packet PDCCH, the descrambling in the step 603 may be the same as a descrambling manner of descrambling data of a non-small data packet service of the PDCCH (for example, the traditional PDCCH) or the ePDCCH (for example, the traditional ePDCCH). Because a size of a CCE of the small data packet PDCCH is different from a size of a CCE of the PDCCH (for example, the traditional PDCCH) or an eCCE of the ePDCCH (for example, the traditional ePDCCH), when a UE acquires data from the small data packet PDCCH, the data is acquired according to the size of the CCE of the small data packet PDCCH. In this way, the data of the small data packet service may be distinguished. In addition, the encoding processing manner of the small data packet PDCCH on the network side may be the same as the encoding processing manner of the PDCCH (for example, the traditional PDCCH) or the ePDCCH (for example, the traditional ePDCCH).
In this embodiment, descrambling is performed, in a pre-acquired descrambling manner, on decoded data. In this way, data of a small data packet service may be distinguished, and therefore, the data of the small data packet service may be uploaded to an upper layer, air interface resources of an LTE system may also be saved, and meanwhile efficiency is higher when the data of the small data packet service is acquired.

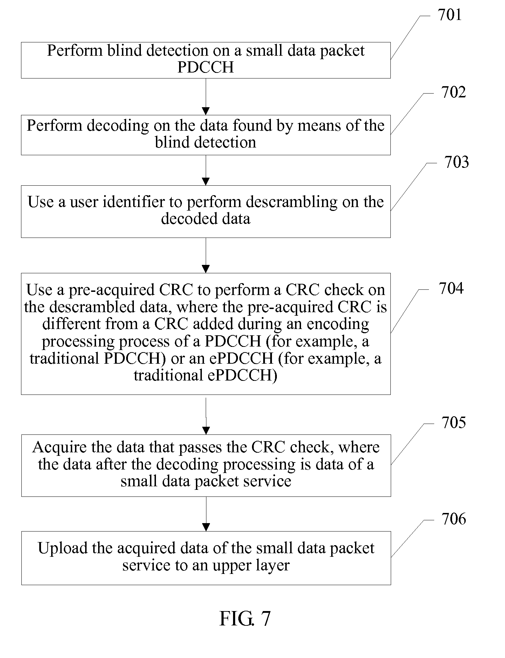

FIG. 7 is a schematic flowchart of a third embodiment of a method for acquiring data by a terminal according to an embodiment of the present invention. The method may be applied to a user equipment on a user side. As shown in FIG. 7, the method includes:

701. Perform blind detection on the small data packet PDCCH.

702. Perform decoding on the data found by means of the blind detection.

703. Use a user identifier to perform descrambling on the decoded data.

Optionally, in the step 703, a positive-sequence user identifier may be used to perform descrambling, and a reverse user identifier may also be used to perform descrambling, which is specifically determined according to a scrambling manner in an encoding processing process of data of a small data packet service carried on a small data packet physical channel on the network side.
704. Use a pre-acquired CRC to perform a CRC check on the descrambled data, where the pre-acquired CRC is different from a CRC added during an encoding processing process of a PDCCH (for example, a traditional PDCCH) or an ePDCCH (for example, a traditional ePDCCH).
Optionally, the pre-acquired CRC may be specifically obtained by calculation by using the following formula:

$$g_{CRC16}(D) = [D^{16} + D^5 + D^3 + D^2 + 1] \text{ for a CRC length } L = 16$$

If the check is successful, then the step 705 is executed to acquire the data that passes the CRC check. If the check is not successful, then the acquired data is determined as data of a non-small data packet service.

The CRC added during the encoding processing of data carried on the small data packet physical channel on the network side is the CRC obtained by calculation by using the foregoing formula.

705. Acquire the data that passes the CRC check, where the data after the decoding processing is data of a small data packet service.

706. Upload the acquired data of the small data packet service to an upper layer.

As an optional implementation manner, when the small data packet physical channel is a small data packet PDCCH, the CRC used in the step 704 may be the same as a CRC used to decode the data of the non-small data packet service of the PDCCH (for example, the traditional PDCCH) or the ePDCCH (for example, the traditional ePDCCH). Because a size of a CCE of the small data packet PDCCH is different from a size of a CCE of the PDCCH or an eCCE of the ePDCCH, when a UE acquires data from the small data packet PDCCH, the data is acquired according to the size of the CCE of the small data packet PDCCH. In this way, the data of the small data packet service may be distinguished. In addition, the encoding processing manner of the small data packet PDCCH on the network side may be the same as the encoding processing manner of the PDCCH (for example, the traditional PDCCH) or the ePDCCH (for example, the traditional ePDCCH).

In this embodiment, a pre-acquired CRC is used to perform a CRC check on descrambled data. In this way, data of a small data packet service may be distinguished, and therefore the data of the small data packet service may be uploaded to an upper layer, air interface resources of an LTE system may also be saved, and meanwhile efficiency is higher when the data of the small data packet service is acquired.

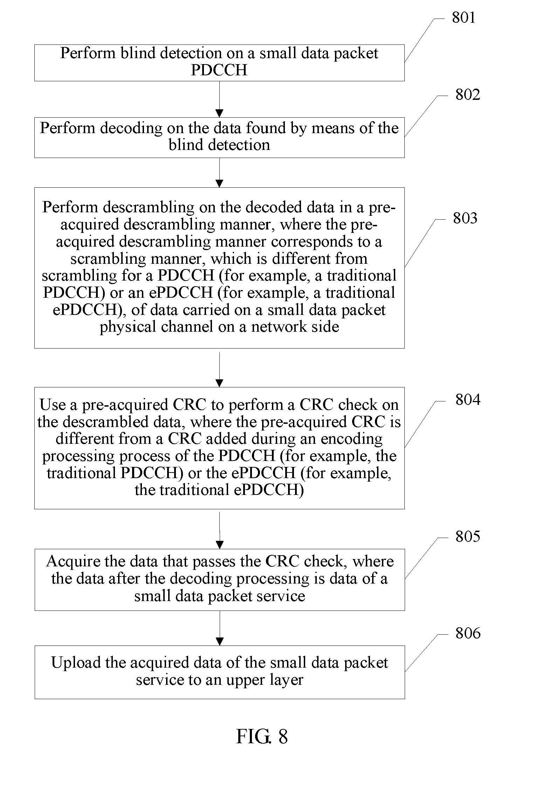

FIG. 8 is a schematic flowchart of a fourth embodiment of a method for acquiring data by a terminal according to an embodiment of the present invention. The method may be applied to a user equipment on a user side. As shown in FIG. 8, the method includes:

801. Perform blind detection on the small data packet PDCCH.

802. Perform decoding on the data found by means of the blind detection.

803. Perform descrambling on the decoded data by using a pre-acquired descrambling manner, where the pre-acquired descrambling manner corresponds to a scrambling manner, which is different from scrambling for a PDCCH (for example, a traditional PDCCH) or an ePDCCH (for example, a traditional ePDCCH), of the data carried on a small data packet physical channel on a network side.

Optionally, if positive-sequence scrambling is performed on the data carried on the PDCCH (for example, the traditional PDCCH) or the ePDCCH (for example, the traditional ePDCCH) on the network side, scrambling different from the positive-sequence scrambling, such as reverse scrambling, is performed on the data carried on the small data packet physical channel on the network side, and the pre-acquired descrambling manner in the step 603 corresponds to the scrambling, different from the positive-sequence scrambling, performed on the data carried on the small data packet physical channel on the network side; if reverse scrambling is performed on the data carried on the small data packet physical channel on the network side, a reverse user identifier may be used in the step 803 to perform descrambling on the decoded data, where the data acquired after the descrambling is data of a small data packet service.

804. Use a pre-acquired CRC to perform a CRC check on the descrambled data, where the pre-acquired CRC is different from a CRC added during an encoding processing process of the PDCCH (for example, the traditional PDCCH) or the ePDCCH (for example, the traditional ePDCCH).

Optionally, the pre-acquired CRC may specifically be obtained by calculation by using the following formula:

$$g_{CRC16}(D) = [D^{16} + D^5 + D^3 + D^2 + 1] \text{ for a CRC length } L = 16$$

If the check is successful, then the step 705 is executed to acquire the data that passes the CRC check. If the check is not successful, then the acquired data is determined as data of a non-small data packet service.

The CRC added during the encoding processing of data carried on the small data packet physical channel on the network side is the CRC obtained by calculation by using the foregoing formula.

805. Acquire the data that passes the CRC check, where the data after the decoding processing is data of a small data packet service.

806. Upload the acquired data of the small data packet service to an upper layer.

As an optional implementation manner, when the small data packet physical channel is a small data packet PDCCH, the CRC used in the step 804 may be the same as a CRC used to decode the data of the non-small data packet service of the PDCCH (for example, the traditional PDCCH) or the ePDCCH (for example, the traditional ePDCCH). Because a size of a CCE of the small data packet PDCCH is different from a size of a CCE of the PDCCH or an eCCE of the ePDCCH, when a UE acquires data from the small data packet PDCCH, the data is acquired according to the size of the CCE of the small data packet PDCCH. In this way, the data of the small data packet service may be distinguished. In addition, the encoding processing manner of the small data packet PDCCH on the network side may be the same as the encoding processing manner of the PDCCH (for example, the traditional PDCCH) or the ePDCCH (for example, the traditional ePDCCH).

In this embodiment, a pre-acquired descrambling manner is first used to perform descrambling on decoded data and a pre-acquired CRC is then used to perform a CRC check on the descrambled data. In this way, data of a small data packet service may be distinguished, and therefore the data of the small data packet service may be uploaded to an upper layer, air interface resources of an LTE system may also be saved, and meanwhile efficiency is higher when the data of the small data packet service is acquired.

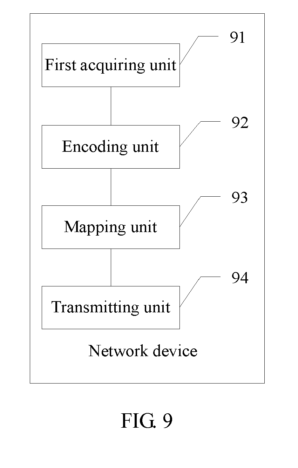

FIG. 9 is a schematic structural diagram of a first embodiment of a network device according to an embodiment of the present invention. As shown in the figure, the network device includes: a first acquiring unit 91, an encoding unit 92, a mapping unit 93, and a transmitting unit 94.

The first acquiring unit 91 is configured to acquire data of a small data packet service.

The encoding unit 92 is configured to perform encoding processing on the data, which is acquired by the first acquiring unit 91, in a predefined encoding processing manner, where the predefined encoding processing manner is different from an encoding processing manner of a PDCCH (for example, the traditional PDCCH) or an ePDCCH (for example, the traditional ePDCCH).

Optionally, the predefined encoding processing manner in the encoding unit 92 may be specifically different from a prior-art encoding processing manner of DCI, where the manner is used in a process in which the PDCCH (for example, the traditional PDCCH) or the ePDCCH (for example, the traditional ePDCCH) indicates DCI for a UE and the differences may specifically lie in a CRC adding phase, scrambling phase, rate matching phase, and mapping phase in the encoding processing process.

The mapping unit 93 is configured to map the data after the encoding processing performed by the encoding unit to a small data packet physical channel.

Optionally, the small data packet physical channel includes: any channel of the PDCCH, the ePDCCH, and a preset small data packet PDCCH.

The PDCCH and ePDCCH may be a traditional PDCCH and a traditional ePDCCH, whereas the small data packet PDCCH is a preset channel according to this embodiment of the present invention. A size of the CCE of the small data packet PDCCH is different from the CCE of the PDCCH (for example, the traditional PDCCH) or the eCCE of the ePDCCH (for example, the traditional ePDCCH). Specifically, if the size of the CCE of the small data packet PDCCH is 108 bits, that is, one CCE of the small data packet PDCCH may transmit a maximum of 108 bits of data packets. The size of the CCE may be specifically set according to a size of a data packet of a small data packet service.

As an optional implementation manner, the mapping unit 93 may be further configured to map the data after the rate matching to a predefined CCE, where a size of the predefined CCE is different from that of the CCE of the PDCCH (for example, the traditional PDCCH) or the eCCE of the ePDCCH (for example, the traditional ePDCCH), and the predefined CCE belongs to a small data packet PDCCH.

The transmitting unit 94 is configured to transmit, to a UE over the small data packet physical channel, the data that is mapped by the mapping unit 93 to the small data packet physical channel.

As an optional implementation manner, when the small data packet physical channel is a small data packet PDCCH, the encoding processing manner in the encoding unit 92 may be the same as the encoding processing manner of the PDCCH (for example, the traditional PDCCH) or the ePDCCH (for example, the traditional ePDCCH). Because the size of the CCE of the small data packet PDCCH is different from the size of the CCE of the PDCCH (for example, the traditional PDCCH) or the eCCE of the ePDCCH (for example, the traditional ePDCCH), when the UE acquires data from the small data packet PDCCH, the data is acquired according to the size of the CCE of the small data packet PDCCH. In this way, the data of the small data packet service can be distinguished.

In this embodiment, an encoding unit performs encoding processing on acquired data in a predefined encoding processing manner; a mapping unit maps the data after the encoding processing to a small data packet physical channel; and then a transmitting unit transmits the data to a UE over the small data packet physical channel. One small data packet physical channel may be used to transmit data of a small data packet service, and therefore air interface resources of an LTE system are saved.

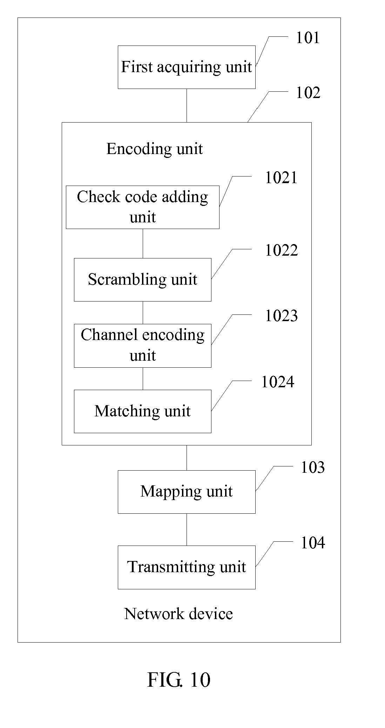

FIG. 10 is a schematic structural diagram of a second embodiment of a network device according to an embodiment of the present invention. As shown in the figure, the network device includes: a first acquiring unit 101, an encoding unit 102, a mapping unit 103, and a transmitting unit 84, where the encoding unit 102 includes: a check code adding unit 1021, a scrambling unit 1022, a channel encoding unit 1023, and a matching unit 1024.

The first acquiring unit 101 is configured to acquire data of a small data packet service.

The check code adding unit 1021 is configured to add a predefined CRC to the data, where the predefined CRC is different from a CRC added during an encoding processing process of a PDCCH (for example, a traditional PDCCH) or an ePDCCH (for example, a traditional ePDCCH).

The scrambling unit 1022 is configured to use a user identifier to perform scrambling on the data to which the predefined CRC is added by the check code adding unit 1021.

The channel encoding unit 1023 is configured to perform channel encoding on the data that is scrambled by the scrambling unit 1022.

The matching unit 1024 is configured to perform rate matching on the data that is encoded by the channel encoding unit 1023.

As an optional implementation manner, the scrambling unit 1022 may be further configured to use a user identifier to perform predefined scrambling on the data to which the CRC is added, where the predefined scrambling is different from scrambling in an encoding processing process of the PDCCH (for example, the traditional PDCCH) or the ePDCCH (for example, the traditional ePDCCH).

As an optional implementation manner, the check code adding unit 1021 may be further configured to add, to the data, a CRC obtained by calculation by using the following formula:

$$g_{CRC16}(D) = [D^{16} + D^5 + D^3 + D^2 + 1] \text{ for a CRC length } L = 16.$$

As an optional implementation manner, the scrambling unit 1022 may be further configured to use a user identifier to perform reverse scrambling on the data to which the CRC is added.

In the foregoing several implementation manners, the encoding processing processes are different from the encoding processing process of the PDCCH (for example, the traditional PDCCH) or the ePDCCH (for example, the traditional ePDCCH), and when acquiring data of a small data packet service, a UE may distinguish the data of the small data packet service.

The mapping unit 103 is configured to map the data after the encoding processing performed by the encoding unit 102 to a small data packet physical channel.

The transmit unit 104 is configured to transmit, to a UE over the small data packet physical channel, the data that is mapped by the mapping unit 103 to the small data packet physical channel.

In this embodiment, the encoding unit performs encoding on data of a small data packet service in an encoding processing process that is different from that of a PDCCH (for example, a traditional PDCCH) or an ePDCCH (for example, a traditional ePDCCH), and when acquiring the data of the small data packet service, a UE may distinguish the data of the small data packet service. In addition, it may be further implemented that one small data packet physical channel may be used to transmit the data of the small data packet service, and therefore air interface resources of an LTE system are saved.

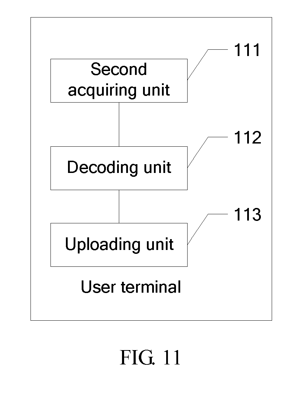

FIG. 11 is a schematic structural diagram of a first embodiment of a UE according to an embodiment of the present invention. As shown in FIG. 11, the UE includes: a decoding unit 111, a second acquiring unit 112, and an uploading unit 113.

The decoding unit 111 is configured to perform, according to a pre-acquired decoding processing manner, decoding processing on data carried on a small data packet physical channel, where the pre-acquired decoding processing manner corresponds to an encoding processing manner, which is different from encoding processing for a PDCCH (for example, a traditional PDCCH) or an ePDCCH (for example, a traditional ePDCCH), of the data carried on the small data packet physical channel on a network side.

The data acquired after the decoding unit 111 performs the decoding processing is data of a small data packet service.

Optionally, if encoding processing for the data carried on the small data packet physical channel on the network side is performed in a CRC adding phrase that is different from a CRC adding phase in an encoding processing process of the PDCCH (for example, the traditional PDCCH) and the ePDCCH (for example, the traditional ePDCCH), then the pre-acquired decoding processing manner is used in a CRC check phase that is different from a CRC check phase of acquired PDCCH (for example, the traditional PDCCH) and the ePDCCH (for example, the traditional ePDCCH) data. Certainly, the difference may also lie in a descrambling phase.

The small data packet physical channel includes: any channel of the PDCC (for example, the traditional PDCCH) H, the ePDCCH (for example, the traditional ePDCCH), and a small data packet PDCCH.

The second acquiring unit 112 is configured to acquire the data after the decoding processing performed by the decoding unit 111, where the data after the decoding processing is the data of the small data packet service.

The uploading unit 113 is configured to upload the data of the small data packet service acquired by the second acquiring unit 112 to an upper layer.

As an optional implementation manner, when the small data packet physical channel is a small data packet PDCCH, the decoding processing manner in the decoding unit 111 may be the same as a decoding manner of decoding data of a non-small data packet service of the PDCCH (for example, the traditional PDCCH) or the ePDCCH (for example, the traditional ePDCCH). Because a size of a CCE of the small data packet PDCCH is different from a size of a CCE of the PDCCH (for example, the traditional PDCCH) or an eCCE of the ePDCCH (for example, the traditional ePDCCH), when the UE acquires data from the small data packet PDCCH, the data is acquired according to the size of the CCE of the small data packet PDCCH. In this way, the data of the small data packet service may be distinguished. In addition, an encoding processing manner of the small data packet PDCCH on the network side may be the same as the encoding processing manner of the PDCCH (for example, the traditional PDCCH) or the ePDCCH (for example, the traditional ePDCCH).

In this embodiment, data of a small data packet service may be acquired from a small data packet physical channel, which, compared with the prior art in which data of a small data packet service is acquired by using two physical channels, may save air interface resources of an LTE system and meanwhile achieve higher efficiency when the data of the small data packet service is acquired.

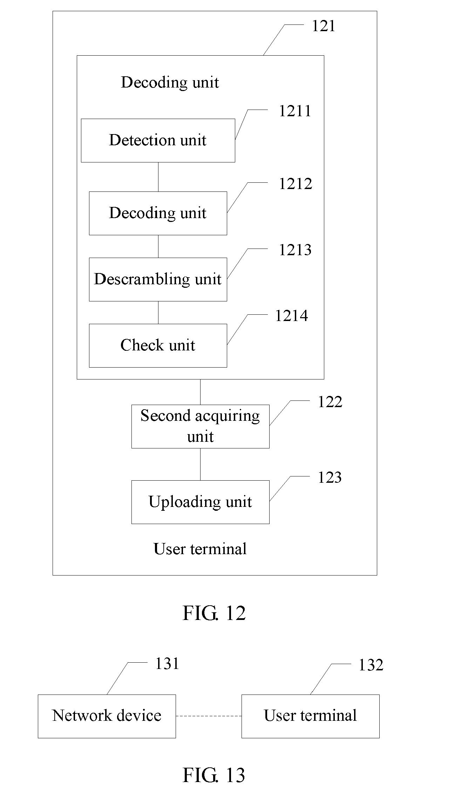

FIG. 12 is a schematic structural diagram of a second embodiment of a UE according to an embodiment of the present invention. As shown in FIG. 12, the UE includes: a decoding unit 121, a second acquiring unit 122, and an uploading unit 123, where the decoding unit 121 includes: a detection unit 1211, a decoding unit 1212, a descrambling unit 1213, and a check unit 1214.

The detection unit 1211 is configured to perform blind detection on the small data packet PDCCH.

The decoding unit 1212 is configured to perform decoding on the data found by means of the blind detection.

The descrambling unit 1213 is configured to perform descrambling, by using a pre-acquired descrambling manner, on the data that is decoded by the decoding unit 1212, where the pre-acquired descrambling manner corresponds to a scrambling manner, which is different from scrambling for a PDCCH (for example, a traditional PDCCH) or an ePDCCH (for example, a traditional ePDCCH), of the data carried on a small data packet physical channel on a network side.

Optionally, if positive-sequence scrambling is performed on the data carried on the PDCCH (for example, the traditional PDCCH) or the ePDCCH (for example, the traditional ePDCCH) on the network side, scrambling different from the positive-sequence scrambling, such as reverse scrambling, is performed on the data carried on the small data packet physical channel on the network side, and the pre-acquired descrambling manner of the descrambling unit 1213 corresponds to the scrambling, different from the positive-sequence scrambling, performed on the data carried on the small data packet physical channel on the network side; if reverse scrambling is performed on the data carried on the small data packet physical channel on the network side, the descrambling unit 1213 may be further configured to use a reverse user identifier to perform descrambling on the data that is decoded by the decoding unit 1212, where the data acquired after the descrambling is data of a small data packet service.

The check unit 1214 is configured to perform a CRC check on the data that is descrambled by the descrambling unit 1213.

The second acquiring unit 122 is configured to acquire the data after the decoding processing, where the data after the decoding processing is the data of the small data packet service.

The uploading unit 123 is configured to upload the acquired data of the small data packet service to an upper layer.

As an optional implementation manner, the check unit 1214 may be further configured to use a pre-acquired CRC to perform a CRC check on the descrambled data, where the pre-acquired CRC is different from a CRC added during an encoding processing process of the PDCCH (for example, the traditional PDCCH) or the ePDCCH (for example, the traditional ePDCCH).

Optionally, the pre-acquired CRC may specifically be a CRC obtained by calculation by using the following formula:

$$g_{CRC16}(D) = [D^{16} + D^5 + D^3 + D^2 + 1] \text{ for a CRC length } L = 16$$

In this implementation manner, the CRC added during the encoding processing of data carried on the small data packet physical channel on the network side is the CRC obtained by calculation by using the foregoing formula.

In this embodiment, the decoding unit may distinguish data of a small data packet service, and therefore the uploading unit may upload the data of the small data packet service to an upper layer, air interface resources of an LTE system may also be saved, and meanwhile efficiency is higher when the data of the small data packet service is acquired.

FIG. 13 is a schematic structural diagram of a data transmission system according to an embodiment of the present invention. As shown in FIG. 13, the data transmission system includes: a network device 131 and a UE 132.

The network device 131 may be a network device of any implementation manner provided in the foregoing embodiments. For example, the network device 13241 may include: a first acquiring unit, an encoding unit, a mapping unit, and a transmitting unit.

The first acquiring unit is configured to acquire data of a small data packet service.

The encoding unit is configured to perform encoding processing on the data, which is acquired by the first acquiring unit, in a predefined encoding processing manner, where the predefined encoding processing manner is different from an encoding processing manner of a PDCCH (for example, a traditional PDCCH) or an ePDCCH (for example, a traditional ePDCCH).

The mapping unit is configured to map the data after the encoding processing performed by the encoding unit to a small data packet physical channel.

The transmitting unit is configured to transmit, to a UE over the small data packet physical channel, the data that is mapped by the mapping unit to the small data packet physical channel.

The UE 132 may be a network device of any implementation manner provided in the foregoing embodiments. For example, the UE 132 may include: a decoding unit, a second acquiring unit, and an uploading unit.

The decoding unit is configured to perform, according to a pre-acquired decoding processing manner, decoding processing on data carried on a small data packet physical channel, where the pre-acquired decoding processing manner corresponds to an encoding processing manner, which is different from encoding processing for the PDCCH (for example, the traditional PDCCH) or the ePDCCH (for example, the traditional ePDCCH), of the data carried on the small data packet physical channel on a network side.

The second acquiring unit is configured to acquire the data after the decoding processing performed by the decoding unit, where the data after the decoding processing is the data of the small data packet service.

The uploading unit is configured to upload, to an upper layer, the data that is of the small data packet service and acquired by the second acquiring unit.

The small data packet physical channel includes: any channel of the PDCCH (for example, the traditional PDCCH), the ePDCCH (for example, the traditional ePDCCH), and a small data packet PDCCH preset on the network side.

In this embodiment, a network device transmits data to a UE over a small data packet physical channel. In this way, it may be implemented that one small data packet physical channel may be used to transmit data of a small data packet service, and therefore air interface resources of an LTE system are saved.

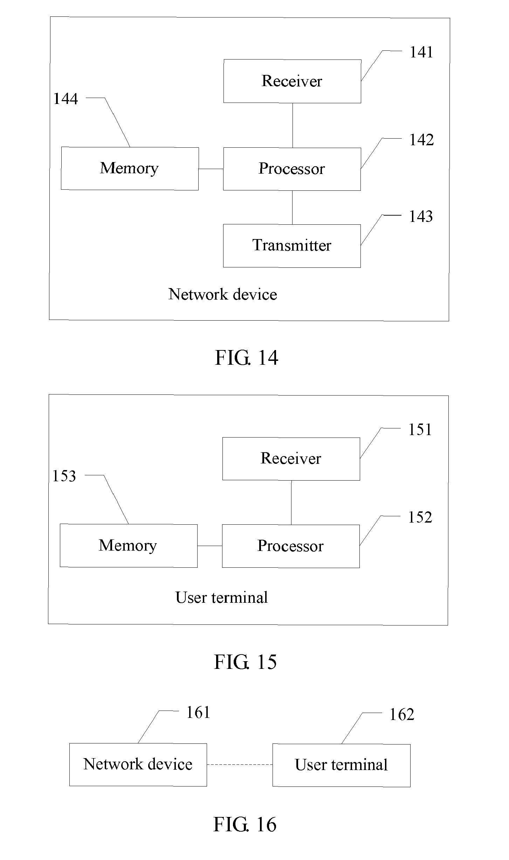

FIG. 14 is a schematic structural diagram of another network device according to an embodiment of the present invention. The network device includes: a receiver 141, a processor 142, a transmitter 143, and a memory 144.

The receiver 141 acquires data of a small data packet service.

The processor 142 executes the following steps:

performing encoding processing on the data in a predefined encoding processing manner, where the predefined encoding processing manner is different from an encoding processing manner of a PDCCH (for example, a traditional PDCCH) or an ePDCCH (for example, a traditional ePDCCH); and
mapping the data after the encoding processing to a small data packet physical channel; where
the small data packet physical channel includes: any channel of the PDCCH (for example, the traditional PDCCH), the ePDCCH (for example, the traditional ePDCCH), and a preset small data packet PDCCH.

The transmitter 143 transmits the data to the UE over the small data packet physical channel.

As an optional implementation manner, the processor 142 may further execute the following steps:

adding a predefined CRC to the data, where the predefined CRC is different from a CRC added during an encoding processing process of a PDCCH (for example, a traditional PDCCH) or an ePDCCH (for example, a traditional ePDCCH);
using a user identifier to perform scrambling on the data to which the predefined CRC is added;
performing channel encoding on the scrambled data; and
performing rate matching on the data after the channel encoding.

As an optional implementation manner, the processor 142 may further execute the following steps:

adding a CRC to the data;
using a user identifier to perform predefined scrambling on the data to which the CRC is added, where the predefined scrambling is different from scrambling performed during an encoding processing process of the PDCCH (for example, the traditional PDCCH) or the ePDCCH (for example, the traditional ePDCCH);
performing channel encoding on the scrambled data; and
performing rate matching on the data after the channel encoding.

As an optional implementation manner, the processor 142 may further execute the following steps:

adding a predefined CRC to the data, where the predefined CRC is different from a CRC added during an encoding processing process of a PDCCH (for example, a traditional PDCCH) or an ePDCCH (for example, a traditional ePDCCH);
using a user identifier to perform predefined scrambling on the data to which the predefined CRC is added, where the predefined scrambling is different from scrambling performed during an encoding processing process of a PDCCH (for example, a traditional PDCCH) or an ePDCCH (for example, a traditional ePDCCH);
performing channel encoding on the scrambled data; and
performing rate matching on the data after the channel encoding.

As an optional implementation manner, the processor 142 may further execute the following step:

calculating a CRC by using the following formula:

$$g_{CRC16}(D) = [D^{16} + D^5 + D^3 + D^2 + 1] \text{ for a CRC length } L = 16$$.

As an optional implementation manner, the processor 142 may further execute the following step:

using a user identifier to perform reverse scrambling on the data to which the CRC is added.

As an optional implementation manner, the processor 142 may further execute the following step:

mapping the data after rate matching to a predefined control channel element, where a size of the predefined control channel element is different from that of a control channel element of a PDCCH (for example, a traditional PDCCH) or an ePDCCH (for example, a traditional ePDCCH), and the predefined control channel element belongs to the small data packet PDCCH.

The memory 144 is configured to store a program that needs to be executed by the processor 143.
In this embodiment, it may be implemented that one small data packet physical channel may be used to transmit data of a small data packet service, and therefore air interface resources of an LTE system are saved.
FIG. 15 is a schematic structural diagram of another UE according to an embodiment of the present invention. As shown in FIG. 13, the UE includes: a receiver 151, a processor 152, and a memory 153.
The receiver 151 acquires data carried on a small data packet physical channel.
The processor 152 executes the following steps:

performing, according to a pre-acquired decoding processing manner, decoding processing on the data carried on the small data packet physical channel, where the pre-acquired decoding processing manner corresponds to an encoding processing manner, which is different from encoding processing for a PDCCH (for example, a traditional PDCCH) or an ePDCCH (for example, a traditional ePDCCH), of the data carried on the small data packet physical channel on a network side;
acquiring the data after the decoding processing, where the data after the decoding processing is data of a small data packet service; and
uploading the acquired data of the small data packet service to an upper layer; where
the small data packet physical channel includes: any channel of the PDCCH (for example, the traditional PDCCH), the ePDCCH (for example, the traditional ePDCCH), and a small data packet PDCCH preset on the network side.

As an optional implementation manner, the processor 132 may further execute the following steps:

performing blind detection on the small data packet PDCCH;

performing decoding on the data found by means of the blind detection;

performing descrambling on the decoded data by using a pre-acquired descrambling manner, where the pre-acquired descrambling manner corresponds to a scrambling manner, which is different from scrambling for the PDCCH (for example, the traditional PDCCH) or the ePDCCH (for example, the traditional ePDCCH), of the data carried on the small data packet physical channel on the network side; and

performing a CRC check on the descrambled data.

As an optional implementation manner, the processor 132 may further execute the following steps:

performing blind detection on the small data packet PDCCH;

performing decoding on the data found by means of the blind detection;

using a user identifier to perform descrambling on the decoded data; and

using a pre-acquired CRC to perform a CRC check on the descrambled data, where the pre-acquired CRC is different from a CRC added during an encoding processing process of the PDCCH (for example, the traditional PDCCH) or the ePDCCH (for example, the traditional ePDCCH).

As an optional implementation manner, the processor 152 may further execute the following steps:

performing blind detection on the small data packet PDCCH;

performing decoding on the data found by means of the blind detection;

performing descrambling on the decoded data by using a pre-acquired descrambling manner, where the pre-acquired descrambling manner corresponds to a scrambling manner, which is different from scrambling for the PDCCH (for example, the traditional PDCCH) or the ePDCCH (for example, the traditional ePDCCH), of the data carried on the small data packet physical channel on the network side; and

using a pre-acquired CRC to perform a CRC check on the descrambled data, where the pre-acquired CRC is different from the CRC added during the encoding processing process of the PDCCH (for example, the traditional PDCCH) or the ePDCCH (for example, the traditional ePDCCH).

As an optional implementation manner, the processor 152 may further execute the following step:

using a reverse user identifier to perform descrambling on the decoded data.

As an optional implementation manner, the processor 152 may further execute the following step:

calculating a CRC by using the following formula:

$$g_{\mathrm{CRC16}}(D) = [D^{16} + D^5 + D^3 + D^2 + 1] \text{ for a CRC length } L = 16$$

Optionally, a size of the control channel element of the small data packet PDCCH is different from that of the control channel element of the PDCCH (for example, the traditional PDCCH) or the ePDCCH (for example, the traditional ePDCCH).

The memory 144 is configured to store a program that needs to be executed by the processor 143.

In this embodiment, a UE may acquire data of a small data packet service from a small data packet physical channel, which, compared with the prior art in which data of a small data packet service is acquired by using two physical channels, may save air interface resources of an LTE system and meanwhile achieve higher efficiency when the data of the small data packet service is acquired.

FIG. 16 is a schematic structural diagram of another data transmission system according to an embodiment of the present invention. As shown in FIG. 14, the data transmission system includes: a network device 161 and a UE 162.

The network device 161 may include: a receiver unit, a processor, a transmitter, and a memory.

An input unit acquires data of a small data packet service.

The processor executes the following steps:

performing encoding processing on the data in a predefined encoding processing manner, where the predefined encoding processing manner is different from an encoding processing manner of a PDCCH (for example, the traditional PDCCH) or an ePDCCH (for example, the traditional ePDCCH); and

mapping the data after the encoding processing to a small data packet physical channel.

The memory is configured to store a program that needs to be executed by the processor; where the small data packet physical channel includes: any channel of the PDCCH (for example, the traditional PDCCH), the ePDCCH (for example, the traditional ePDCCH), and a preset small data packet PDCCH.

The UE 162 may include: a receiver, a processor, and a memory.

An input unit acquires data carried on a small data packet physical channel.

The processor executes the following steps:

performing, according to a pre-acquired decoding processing manner, decoding processing on data carried on a small data packet physical channel, where the pre-acquired decoding processing manner corresponds to an encoding processing manner, which is different from encoding processing for a PDCCH (for example, a traditional PDCCH) or an ePDCCH (for example, a traditional ePDCCH), of the data carried on the small data packet physical channel on a network side;

acquiring the data after the decoding processing, where the data after the decoding processing is data of a small data packet service; and

uploading the acquired data of the small data packet service to an upper layer.

The memory is configured to store a program that needs to be executed by the processor.

It should be noted that, for other specific implementation manners of the data transmission system provided in the embodiments of the present invention, reference may be made to the implementation manners of the foregoing method and apparatus embodiments, and details are not described herein again.

In this embodiment, a network device transmits data to a UE over a small data packet physical channel. In this way, it may be implemented that one small data packet physical channel may be used to transmit data of a small data packet service, and therefore air interface resources of an LTE system are saved.

A person of ordinary skill in the art may also understand that all or a part of the steps of the methods in the foregoing embodiments may be implemented by a computer program instructing relevant hardware. The program may be stored in a computer readable storage medium. When the program is executed, the steps of embodiments of the foregoing methods may be included. The foregoing storage medium may be a magnetic disk, an optical disc, a read-only memory (Read-Only Memory, ROM), a random access memory (Random Access Memory, RAM for short), or the like.

What are disclosed above are merely exemplary embodiments of the present invention, and certainly are not intended to limit the scope of claims of the present invention. Therefore, equivalent variations made according to the claims of the present invention shall fall within the scope of the present invention.

**Claims**

1. A data transmission method, comprising:

acquiring data of a small data packet service;
performing encoding processing on the data in a predefined encoding processing manner, wherein the predefined encoding processing manner is different from an encoding processing manner of a physical downlink control channel or an enhanced physical downlink control channel;
mapping the data after the encoding processing to a small data packet physical channel; and
transmitting the data to a user terminal over the small data packet physical channel; wherein
the small data packet physical channel comprises: any channel of the physical downlink control channel, the enhanced physical downlink control channel, and a preset small data packet physical downlink control channel.

2. The method according to claim 1, wherein the performing encoding processing on the data in a predefined encoding processing manner comprises:

adding a predefined cyclic redundancy check code to the data, wherein the predefined cyclic redundancy check code is different from a cyclic redundancy check code added during an encoding processing process of the physical downlink control channel or the enhanced physical downlink control channel;
using a user identifier to perform scrambling on the data to which the predefined cyclic redundancy check code is added, wherein the user identifier is a user identifier of a user terminal corresponding to the data of the small data packet service;
performing channel encoding on the scrambled data; and

performing rate matching on the data after the channel encoding.

3. The method according to claim 1, wherein the performing encoding processing on the data in a predefined encoding processing manner comprises:

adding a cyclic redundancy check code to the data;
using a user identifier to perform predefined scrambling on the data to which the cyclic redundancy check code is added, wherein the predefined scrambling is different from scrambling performed during an encoding processing process of the physical downlink control channel or the enhanced physical downlink control channel; and the user identifier is a user identifier of a user terminal corresponding to the data of the small data packet service;
performing channel encoding on the scrambled data; and
performing rate matching on the data after the channel encoding.

4. The method according to claim 1, wherein the performing encoding processing on the data in a predefined encoding processing manner comprises:

adding a predefined cyclic redundancy check code to the data, wherein the predefined cyclic redundancy check code is different from a cyclic redundancy check code added during an encoding processing process of the physical downlink control channel or the enhanced physical downlink control channel;
using a user identifier to perform predefined scrambling on the data to which the predefined cyclic redundancy check code is added, wherein the predefined scrambling is different from scrambling performed during the encoding processing process of the physical downlink control channel or the enhanced physical downlink control channel; and the user identifier is a user identifier of a user terminal corresponding to the data of the small data packet service;
performing channel encoding on the scrambled data; and
performing rate matching on the data after the channel encoding.

5. The method according to claim 2 or 4, wherein the predefined cyclic redundancy check code comprises:

a cyclic redundancy check code obtained by calculation by using the following formula:

$$g_{CRC16}(D) = [D^{16} + D^5 + D^3 + D^2 + 1] \text{ for a CRC length } L = 16$$
.

6. The method according to claim 3 or 4, wherein the predefined scrambling comprises: reverse scrambling.

7. The method according to any one of claims 2 to 6, wherein the mapping the data after the encoding processing to a small data packet physical channel comprises:

mapping the data after the rate matching to a predefined control channel element, wherein a size of the predefined control channel element is different from that of a control channel element of the physical downlink control channel or the enhanced physical downlink control channel, and the predefined control channel element belongs to the small data packet physical downlink control channel.

8. A method for acquiring data by a terminal, comprising:

performing, according to a pre-acquired decoding processing manner, decoding processing on data carried on a small data packet physical channel, wherein the pre-acquired decoding processing manner corresponds to an encoding processing manner, which is different from encoding processing for a physical downlink control channel or an enhanced physical downlink control channel, of the data carried on the small data packet physical channel on a network side;
acquiring the data after the decoding processing, wherein the data after the decoding processing is data of a small data packet service; and
uploading the acquired data of the small data packet service to an upper layer; wherein
the small data packet physical channel comprises: any channel of the physical downlink control channel, the enhanced physical downlink control channel, and a small data packet physical downlink control channel preset on the network side.

9. The method according to claim 8, wherein the performing, according to a pre-acquired decoding processing manner, decoding processing on data carried on a small data packet physical channel comprises:

performing blind detection on the small data packet physical downlink control channel;
performing decoding on the data found by means of the blind detection;
performing descrambling on the decoded data by using a pre-acquired descrambling manner, wherein the pre-acquired descrambling manner corresponds to a scrambling manner, which is different from scrambling for the physical downlink control channel or the enhanced physical downlink control channel, of the data carried on the small data packet physical channel on the network side; and
performing a cyclic redundancy check code check on the descrambled data.

10. The method according to claim 8, wherein the performing, according to a pre-acquired decoding processing manner, decoding processing on data carried on a small data packet physical channel comprises:

performing blind detection on the small data packet physical downlink control channel;
performing decoding on the data found by means of the blind detection;
using a user identifier to perform descrambling on the decoded data; and
using a pre-acquired cyclic redundancy check code to perform a cyclic redundancy check code check on the descrambled data, wherein the pre-acquired cyclic redundancy check code is different from a cyclic redundancy check code added during an encoding processing process of the physical downlink control channel or the enhanced physical downlink control channel.

11. The method according to claim 8, wherein the performing, according to a pre-acquired decoding processing manner, decoding processing on data carried on a small data packet physical channel comprises:

performing blind detection on the small data packet physical downlink control channel;
performing decoding on the data found by means of the blind detection;
performing descrambling on the decoded data by using a pre-acquired descrambling manner, wherein the pre-acquired descrambling manner corresponds to a scrambling manner, which is different from scrambling for the physical downlink control channel or the enhanced physical downlink control channel, of the data carried on the small data packet physical channel on the network side; and
using a pre-acquired cyclic redundancy check code to perform a cyclic redundancy check code check on the descrambled data, wherein the pre-acquired cyclic redundancy check code is different from a cyclic redundancy check code added during an encoding processing process of the physical downlink control channel or the enhanced physical downlink control channel.

12. The method according to claim 9 or 11, wherein the performing descrambling on the decoded data by using a pre-acquired descrambling manner comprises:

using a reverse user identifier to perform descrambling on the decoded data.

13. The method according to claim 10 or 11, wherein the pre-acquired cyclic redundancy check code comprises:

a cyclic redundancy check code obtained by calculation by using the following formula:

$$g_{CRC16}(D) = [D^{16} + D^5 + D^3 + D^2 + 1] \text{ for a CRC length } L = 16.$$

14. The method according to any one of claims 8 to 11, wherein a size of a control channel element of the small data packet physical downlink control channel is different from that of a control channel element of the physical downlink control channel or the enhanced physical downlink control channel.

15. A network device, comprising: a first acquiring unit, an encoding unit, a mapping unit, and a transmitting unit, wherein:

the first acquiring unit is configured to acquire data of a small data packet service;
the encoding unit is configured to perform encoding processing on the data, which is acquired by the first acquiring unit, in a predefined encoding processing manner, wherein the predefined encoding processing manner is different from an encoding processing manner of a physical downlink control channel or an enhanced physical downlink control channel;

the mapping unit is configured to map the data that has the encoding processing performed by the encoding unit to a small data packet physical channel; and

the transmitting unit is configured to transmit, to a user terminal over the small data packet physical channel, the data that is mapped by the mapping unit to the small data packet physical channel; wherein

the small data packet physical channel comprises: any channel of the physical downlink control channel, the enhanced physical downlink control channel, and a preset small data packet physical downlink control channel.

**16.** The device according to claim 15, wherein the encoding unit comprises:

a check code adding unit, configured to add a predefined cyclic redundancy check code to the data, wherein the predefined cyclic redundancy check code is different from a cyclic redundancy check code added during an encoding processing process of the physical downlink control channel or the enhanced physical downlink control channel;

a scrambling unit, configured to use a user identifier to perform scrambling on the data to which the cyclic redundancy check code is added by the check code adding unit;

a channel encoding unit, configured to perform channel encoding on the data that is scrambled by the scrambling unit; and

a matching unit, configured to perform rate matching on the data after the channel encoding.

**17.** The device according to claim 16, wherein the scrambling unit is further configured to use a user identifier to perform predefined scrambling on the data to which the cyclic redundancy check code is added by the check code adding unit, wherein the predefined scrambling is different from scrambling performed during an encoding processing process of the physical downlink control channel or the enhanced physical downlink control channel.

**18.** The device according to claim 16 or 17, wherein the check code adding unit is further configured to add, to the data, a cyclic redundancy check code that is of the data of the small data packet service and calculated by using the following formula:

$$g_{CRC16}(D) = [D^{16} + D^5 + D^3 + D^2 + 1] \text{ for a CRC length } L = 16.$$

**19.** The device according to claim 16 or 17, wherein the scrambling unit is further configured to use a user identifier to perform reverse scrambling on the data to which the cyclic redundancy check code is added by the check code adding unit.

**20.** The device according to any one of claims 16 to 19, wherein the mapping unit is further configured to map the data after the rate matching to a predefined control channel element, wherein a size of the predefined control channel element is different from that of a control channel element of the physical downlink control channel or the enhanced physical downlink control channel, and the predefined control channel element belongs to the small data packet physical downlink control channel.

**21.** A user terminal, comprising: a decoding unit, a second acquiring unit, and an uploading unit, wherein:

the decoding unit is configured to perform, according to a pre-acquired decoding processing manner, decoding processing on data carried on a small data packet physical channel, wherein the pre-acquired decoding processing manner corresponds to an encoding processing manner, which is different from encoding processing for a physical downlink control channel or an enhanced physical downlink control channel, of the data carried on the small data packet physical channel on a network side;

the second acquiring unit is configured to acquire the data after the decoding processing performed by the decoding unit, wherein the data after the decoding processing is data of a small data packet service; and

the uploading unit is configured to upload the data of the small data packet service acquired by the second acquiring unit acquiring unit to an upper layer; wherein

the small data packet physical channel comprises: any channel of the physical downlink control channel, the enhanced physical downlink control channel, and a small data packet physical downlink control channel preset on the network side.

**22.** The user terminal according to claim 21, wherein the decoding unit comprises:

a detection unit, configured to perform blind detection on the small data packet physical downlink control channel;

a decoding unit, configured to perform decoding on the data found by the detection unit by means of the blind detection;

a descrambling unit, configured to perform descrambling, by using a pre-acquired descrambling manner, on the data that is decoded by the decoding unit, wherein the pre-acquired descrambling manner corresponds to a scrambling manner, which is different from scrambling for the physical downlink control channel or the enhanced physical downlink control channel, of the data carried on the small data packet physical channel on the network side; and

a check unit, configured to perform a cyclic redundancy check code check on the data that is descrambled by the descrambling unit.

**23.** The user terminal according to claim 22, wherein the check unit is further configured to use a pre-acquired cyclic redundancy check code to perform a cyclic redundancy check code check on the data that is descrambled by the descrambling unit, wherein the pre-acquired cyclic redundancy check code is different from a cyclic redundancy check code added during an encoding processing process of the physical downlink control channel or the enhanced physical downlink control channel.

**24.** The user terminal according to claim 22 or 23, wherein the descrambling unit is further configured to use a reverse user identifier to perform descrambling on the data that is decoded by the decoding unit.

**25.** The user terminal according to claim 23 or 24, wherein the check unit is further configured to perform a check on the descrambled data by using a cyclic redundancy check code that is obtained by calculation by using the following formula:

$$g_{CRC16}(D) = [D^{16} + D^5 + D^3 + D^2 + 1] \text{ for a CRC length } L = 16.$$

**26.** A data transmission system, comprising: a network device and a user terminal, wherein:

the network device comprises: a first acquiring unit, an encoding unit, a mapping unit, and a transmitting unit, wherein:

the first acquiring unit is configured to acquire data of a small data packet service;

the encoding unit is configured to perform encoding processing on the data, which is acquired by the first acquiring unit, in a predefined encoding processing manner, wherein the predefined encoding processing manner is different from an encoding processing manner of a physical downlink control channel or an enhanced physical downlink control channel;

the mapping unit is configured to map the data that has the encoding processing performed by the encoding unit to a small data packet physical channel;

the transmitting unit is configured to transmit, to a user terminal over the small data packet physical channel, the data that is mapped by the mapping unit to the small data packet physical channel; and

the user terminal comprises: a decoding unit, a second acquiring unit, and an uploading unit, wherein:

the decoding unit is configured to perform, according to a pre-acquired decoding processing manner, decoding processing on data carried on a small data packet physical channel, wherein the pre-acquired decoding processing manner corresponds to an encoding processing manner, which is different from encoding processing for the physical downlink control channel or the enhanced physical downlink control channel, of the data carried on the small data packet physical channel on a network side; the second acquiring unit is configured to acquire the data after the decoding processing performed by the decoding unit, wherein the data after the decoding processing is the data of the small data packet service; and the uploading unit is configured to upload, to an upper layer, the data that is of the small data packet service and acquired by the second acquiring unit; wherein the small data packet physical channel comprises: any channel of the physical downlink control channel, the enhanced physical downlink control channel, and a small data packet physical downlink control channel preset on the network side.

Acquire data of a small data packet service — 101

Perform encoding processing on the data in a predefined encoding processing manner, where the predefined encoding processing manner is different from an encoding processing manner of a PDCCH or an ePDCCH — 102

Map the data after the encoding processing to a small data packet physical channel — 103

Transmit the data to a UE over the small data packet physical channel — 104

FIG. 1

Acquire data of a small data packet service — 201

Add a predefined CRC to the data, where the predefined CRC is different from a CRC added during an encoding processing process of a PDCCH (for example, a traditional PDCCH) or an ePDCCH (for example, a traditional ePDCCH) — 202

Use a user identifier to perform scrambling on the data to which the predefined CRC is added — 203

Perform channel encoding on the scrambled data — 204

Perform rate matching on the data after the channel encoding — 205

Map the data after the rate matching to a small data packet physical channel — 206

Transmit the data to a UE over the small data packet physical channel — 207

FIG. 2

Acquire data of a small data packet service — 301

Add a CRC to the data — 302

Use a user identifier to perform predefined scrambling on the data to which the CRC is added, where the predefined scrambling is different from scrambling performed during an encoding processing process of a PDCCH (for example, a traditional PDCCH) or an ePDCCH (for example, a traditional ePDCCH) — 303

Perform channel encoding on the scrambled data — 304

Perform rate matching on the data after the channel encoding — 305

Map the data after the rate matching to a small data packet physical channel — 306

Transmit the data to a UE over the small data packet physical channel — 307

FIG. 3

Acquire data of a small data packet service — 401

Add a predefined CRC to the data, where the predefined CRC is different from a CRC added during an encoding processing process of a PDCCH (for example, a traditional PDCCH) or an ePDCCH (for example, a traditional ePDCCH) — 402

Use a user identifier to perform predefined scrambling on the data to which the CRC is added, where the predefined scrambling is different from scrambling performed during the encoding processing process of the PDCCH (for example, the traditional PDCCH) or the ePDCCH (for example, the traditional ePDCCH) — 403

Perform channel encoding on the scrambled data — 404

Perform rate matching on the data after the channel encoding — 405

Map the data after the rate matching to a small data packet physical channel — 406

Transmit the data to a UE over the small data packet physical channel — 407

FIG. 4

Perform, according to a pre-acquired decoding processing manner, decoding processing on data carried on a small data packet physical channel, where the pre-acquired decoding processing manner corresponds to an encoding processing manner, which is different from encoding processing for a PDCCH or an ePDCCH, of the data carried on the small data packet physical channel on a network side — 501

Acquire the data after the decoding processing, where the data after the decoding processing is data of a small data packet service — 502

Upload the acquired data of the small data packet service to an upper layer — 503

FIG. 5

Perform blind detection on a small data packet PDCCH — 601

Perform decoding on the data found by means of the blind detection — 602

Perform descrambling on the decoded data in a pre-acquired descrambling manner, where the pre-acquired descrambling manner corresponds to a scrambling manner, which is different from scrambling for a physical downlink control channel or an enhanced physical downlink control channel, of data carried on a small data packet physical channel on a network side — 603

Perform a CRC check on the descrambled data — 604

Acquire the data that passes the CRC check, where the data after the decoding processing is data of a small data packet service — 605

Upload the acquired data of the small data packet service to an upper layer — 606

FIG. 6

Perform blind detection on a small data packet PDCCH — 701

Perform decoding on the data found by means of the blind detection — 702

Use a user identifier to perform descrambling on the decoded data — 703

Use a pre-acquired CRC to perform a CRC check on the descrambled data, where the pre-acquired CRC is different from a CRC added during an encoding processing process of a PDCCH (for example, a traditional PDCCH) or an ePDCCH (for example, a traditional ePDCCH) — 704

Acquire the data that passes the CRC check, where the data after the decoding processing is data of a small data packet service — 705

Upload the acquired data of the small data packet service to an upper layer — 706

FIG. 7

```
                                                                    ⌐ 801
┌─────────────────────────────────────────────┐
│   Perform blind detection on a small data packet │
│                  PDCCH                        │
└─────────────────────────────────────────────┘
                      │
                      │                             ⌐ 802
                      ▼
┌─────────────────────────────────────────────┐
│  Perform decoding on the data found by means of the │
│                 blind detection               │
└─────────────────────────────────────────────┘
                      │
                      ▼
┌─────────────────────────────────────────────┐
│  Perform descrambling on the decoded data in a pre- │
│    acquired descrambling manner, where the pre- │
│    acquired descrambling manner corresponds to a │    ⌐ 803
│      scrambling manner, which is different from │
│   scrambling for a PDCCH (for example, a traditional │
│    PDCCH) or an ePDCCH (for example, a traditional │
│      ePDCCH), of data carried on a small data packet │
│         physical channel on a network side    │
└─────────────────────────────────────────────┘
                      │
                      ▼
┌─────────────────────────────────────────────┐
│  Use a pre-acquired CRC to perform a CRC check on │    ⌐ 804
│  the descrambled data, where the pre-acquired CRC is │
│     different from a CRC added during an encoding │
│    processing process of the PDCCH (for example, the │
│    traditional PDCCH) or the ePDCCH (for example, │
│            the traditional ePDCCH)            │
└─────────────────────────────────────────────┘
                      │
                      ▼
┌─────────────────────────────────────────────┐
│  Acquire the data that passes the CRC check, where │    ⌐ 805
│   the data after the decoding processing is data of a │
│           small data packet service          │
└─────────────────────────────────────────────┘
                      │
                      ▼
┌─────────────────────────────────────────────┐
│   Upload the acquired data of the small data packet │    ⌐ 806
│            service to an upper layer          │
└─────────────────────────────────────────────┘
```

FIG. 8

First acquiring unit — 91

Encoding unit — 92

Mapping unit — 93

Transmitting unit — 94

Network device

FIG. 9



FIG. 10

Second
acquiring unit —— 111

Decoding unit —— 112

Uploading unit —— 113

User terminal

FIG. 11

121

Decoding unit

1211
Detection unit

1212
Decoding unit

1213
Descrambling unit

1214
Check unit

122
Second acquiring unit

123
Uploading unit

User terminal

FIG. 12

131
Network device

132
User terminal

FIG. 13

FIG. 14

FIG. 15

FIG. 16

# INTERNATIONAL SEARCH REPORT

International application No.

**PCT/CN2013/074419**

### A. CLASSIFICATION OF SUBJECT MATTER

H04W 4/20 (2009.01) i

According to International Patent Classification (IPC) or to both national classification and IPC

### B. FIELDS SEARCHED

Minimum documentation searched (classification system followed by classification symbols)

IPC: H04L; H04Q; H04W

Documentation searched other than minimum documentation to the extent that such documents are included in the fields searched

Electronic data base consulted during the international search (name of data base and, where practicable, search terms used)

CPRSABS; CNTXT; VEN: downlink physical control channel, machine type, small data, small packet, pdcch, mtc, m2m

### C. DOCUMENTS CONSIDERED TO BE RELEVANT

| Category* | Citation of document, with indication, where appropriate, of the relevant passages | Relevant to claim No. |
|---|---|---|
| Y | CN 102413576 A (ACADEMY OF TELECOMMUNICATION TECHNOLOGY), 11 April 2012 (11.04.2012), description, paragraphs [0009]-[0073] | 1-26 |
| Y | CN 102457825 A (ACADEMY OF TELECOMMUNICATION TECHNOLOGY), 16 May 2012 (16.05.2012), description, paragraphs [0050]-[0103] | 1-26 |

☐ Further documents are listed in the continuation of Box C.    ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 26 June 2013 (26.06.2013) | **01 August 2013 (01.08.2013)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **GAO, Lijun** <br><br> Telephone No.: (86-10) **62411224** |

Form PCT/ISA/210 (second sheet) (July 2009)

## INTERNATIONAL SEARCH REPORT
### Information on patent family members

| International application No. |
| --- |
| **PCT/CN2013/074419** |

| Patent Documents referred in the Report | Publication Date | Patent Family | Publication Date |
| --- | --- | --- | --- |
| CN 102413576 A | 11.04.2012 | None | |
| CN 102457825 A | 16.05.2012 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210249108